# EUROPÄISCHE PATENTSCHRIFT

(11) **EP 1 029 390 B1**
(45) Veröffentlichungstag und Bekanntmachung des Hinweises auf die Patenterteilung: **19.09.2001**
(21) Anmeldenummer: 98959749.7
(22) Anmeldetag: 21.10.1998
(51) Int. Cl.: H02B 1/21

(54) **KOMMUNIKATIONSFÄHIGE SCHALTGERÄTEEINHEIT**
COMMUNICATING SWITCH GEAR UNIT
ENSEMBLE D'APPAREILS DE COMMUTATION APTE A LA COMMUNICATION

(30) Priorität: 03.11.1997 DE 19748429
(43) Veröffentlichungstag der Anmeldung: 23.08.2000
(73) Patentinhaber: SIEMENS AKTIENGESELLSCHAFT, 80333 München (DE)
(72) Erfinder: KAADEN, Peter, D-92421 Schwandorf (DE); BURY, Joachim, D-92245 Kümmersbruck (DE)
(86) Internationale Anmeldenummer: DE9803093
(87) Internationale Veröffentlichungsnummer: WO9923736

(56) Entgegenhaltungen:
- EP-A- 0 709 933
- DE-A- 4 303 717
- DE-A- 19 515 923

## Beschreibung

Die Erfindung bezieht sich auf eine kommunikationsfähige Schaltgeräteeinheit zum Anschluß an ein Bussystem, welches einen Energiebus, einen Datenbus sowie mindestens einen Hilfsenergiebus enthält, wobei die Schaltgeräteeinheit, die zum betriebsmäßigen Schalten und Schützen eines Verbrauchers dient, einen Träger und einen auf diesem montierbare Baugruppe umfaßt und wobei das Bussystem in den Träger einlegbar ist und die Baugruppe das Bussystem nach Montage auf den Träger kontaktiert.

Eine gattungsgemäße Schaltgeräteeinheit ist aus der EP 0 753 916 A3 bekannt, wobei es sich hier um einen Verbraucherabzweig handelt. Der Energiebus, der Datenbus und der Hilfsenergiebus werden hier als Sammelschiene im Bodenteil des Verbraucherabzweigs verlegt, nachdem dieses im Schaltschrank montiert ist. Dies bedeutet, daß für die Montage von vornherein klar sein muß, welche Schaltgeräte an welcher Stelle im Schaltschrank vorzusehen sind. Das bekannte Sammelschienen-Adaptersystem dient zum Anschluß eines Motorabzweigs und weist an seiner Oberseite Hutschienen auf, auf die ein Schütz und ein Leistungsschalter aufschnappbar sind. Das Sammelschienen-Adaptersystem enthält eine aus einem Bodenteil und einem Wannenoberteil zusammengesetzte Wanne. Im Bodenteil sind Halterungselemente zur Aufnahme von Stromschienen vorgesehen. Das Wannenoberteil enthält frontseitig berührungssichere Öffnungen, durch welche Kontakte an einem Adapteroberteil zur Kontaktierung mit den Stromschienen hindurchführbar sind. Dies erfolgt durch Einhängen und Aufschwenken des Adapters.

Aus der WO 96/42 188 ist eine kommunikationsfähige Schaltgeräteeinheit bekannt, die für einen Schaltschrank mit einem Datenbus eine einfache Adaptierung und Kontaktierung von Schaltgeräten in Verbindung mit einer zur Datenkommunikation erforderlichen Elektronik schafft. Die Schaltgeräteeinheit besteht aus einem Geräteträger, auf dem mehrere Schaltgeräte über eine Normprofilschiene adaptierbar sind, sowie einer Kommunikationseinheit, die am Geräteträger gehalten ist und Steckkontakte aufweist, über die die elektrische Ansteuerung der Schaltgeräte erfolgt. Die Schaltgeräteeinheit kann z.B. ein Schütz und einen Leistungsschalter umfassen. Wird ein weiteres Schaltgerät benötigt, wird der Geräteträger um ein Geräteträger-Erweiterungsteil erweitert. An der Rückwand des Geräteträgers der Schaltgeräteeinheit liegen Hauptstromanschlüsse zum Anschluß an ein dreiphasiges Sammelschienensystem. Die Schaltgeräteeinheit wird durch Einhängen an den Sammelschienen zugleich gehaltert und kontaktiert. Die Übergabe der Daten an die Elektronik im Kommunikationsmodul erfolgt über einen Busstecker oder durch Durchdringungskontaktierung einer Busleitung direkt am Kommunikationsmodul.

Bei Automatisierungsgeräten ist es wie in der EP 0 236 711 A2 ausgeführt bekannt, zur Adaptierung von Ein-/Ausgabe-Baugruppen Baugruppenträger zu verwenden, die auf Tragschienen aufschnappbar sind und die über zusätzliche Steuerleitungen miteinander verbindbar sind. Die Baugruppenträger sind hier einzeln als modulare, eine Anpassungsschaltung aufweisende Baugruppenträger ausgebildet. Mechanisch mit jedem Baugruppenträger ist ein Anschlußblock für die externe Verdrahtung verbunden. Anschlußblock und Baugruppenträger sind über Steckverbindung mit den einzelnen Baugruppen verbindbar.

Die Anpassungsschaltung ist hier als Schaltungsplatine im Baugruppenträger ausgebildet. Auf der Schaltungsplatine sind Buchsenleisten zum Verbinden mit Steckanschlüssen der Ein-/ Ausgabe-Baugruppen angeordnet. Zum Verbinden der modularen Baugruppenträger untereinander dient eine Steckerleiste, die an der Schaltungsplatine angeschlossen mit einem Bandkabel in Verbindung steht, an dem seinerseits eine Buchsenleiste angeschlossen ist. Über diese ist die elektrische Verbindung der Steckerleiste des benachbarten Baugruppenträgers herstellbar. Die Baugruppenträger lassen sich Seite an Seite durch Verhakung von seitlich vorstehenden Nasen in angepaßt ausgeführten Ausnehmungen in den Gehäusen der Baugruppenträger miteinander verbinden. Davon unabhängig erfolgt die elektrische Verbindung.

In der noch unveröffentlichten deutschen Patentanmeldung 197 34 709.6 ist ein Schaltgerätesystem mit modular aufgebautem Energiebus offenbart. Mehrere Schaltgeräte werden hier über dieselbe Energieeinspeisung betrieben. Hierzu ist jedem Schaltgerät ein Energiebusmodul zugeordnet, das jeweils einen Energiebus-Abschnitt aufweist, über den das zugehörige Schaltgerät mit der Energieeinspeisung elektrisch verbindbar ist. Dabei sind die Energiebus-Abschnitte miteinander zu einer durchgehenden Verteilerschiene verbunden. Die Energieeinspeisung ist mindestens an einen der Energiebus-Abschnitte anschließbar.

Der Erfindung liegt die Aufgabe zugrunde, eine kommunikationsfähige Schalt- und Steuergeräteinheit der obengenannten Art zu schaffen, die mit geringem Aufwand einschließlich des erforderlichen Bussystems erweiterbar ist und zugleich eine einfache Montage und Demontage unter Einhaltung der Berührsicherheit beim Anschluß an den Energiebus ermöglicht.

Die Aufgabe wird mit den Merkmalen nach Anspruch 1 gelöst.

Dabei schafft die Ausführung des Trägers als modulares Basis-Unterteil mit einem integrierten modularen Bussystem die Möglichkeit einer beliebigen Erweiterung des Trägersystems unter gleichzeitiger Verlängerung des Bussystems in einem einzigen Arbeitsgang. Dieser modulare Aufbau gestattet es, ein Schaltgerätesystem, zugeschnitten auf den gerade gewünschten Umfang aufzubauen, wobei lediglich die unbedingt erforderlichen Komponenten eingesetzt werden. Hierdurch wird eine wesentliche Kostenersparnis erreicht.

Die Anordnung der Anschlüsse an den Energiebus-Abschnitt in einem Führungsschacht, der zugleich die Baugruppe für die Montage und Kontaktierung auf dem Basis-Unterteil zentriert, erfüllt die Funktionen der mechanischen und elektrischen Verbindung in einem Arbeitsschritt. Dabei wird durch die Lage der Anschlüsse an den Energiebus-Abschnitt im Führungsschacht die erforderliche Berührsicherheit erreicht. Es wird dadurch ein ungefährdetes Verbinden und Lösen der Anschlüsse an den Energiebus-Abschnitt erreicht, der generell mit Spannungen über 100 V beaufschlagt ist.

Eine vorteilhafte Weitergestaltung der Erfindung besteht, wenn die Baugruppe derart an das Basis-Unterteil angekoppelt ist, daß ein teilweises Lösen der Baugruppe mit gleichzeitigem Auftrennen der Kontaktierung zum Steuerbus-Abschnitt unter Beibehaltung der Anschlüsse zum Energiebus-Abschnitt ermöglicht. Das voreilende Auftrennen der Anschlüsse zum Datenbus-Abschnitt bewirkt nämlich, daß die Kontakte der Schaltgeräteeinheit geöffnet werden, so daß hierdurch das betriebsmäβige Abschalten angeschlossener Verbraucher vom Energiebus in jedem Fall sichergestellt ist. Es wird hiermit außerdem sichergestellt, daß bei endgültigem Lösen der Baugruppe mit dem Abziehen der Steckkontakte zum Energiebus dieser Vorgang nur im stromlosen Zustand erfolgt.

Vorteilhafterweise ist die Ankopplung der Baugruppe durch einen Gelenk- und/oder Drehmechanismus realisiert.

Weiterhin ist es vorteilhaft, wenn das Basis-Unterteil aus einem Träger mit dem Führungsschacht und einem daran ankoppelbaren Baustein zusammengesetzt ist. Dieser modulare Aufbau gibt die Möglichkeit, anwendungsbezogen bestimmte Bausteine anzukoppeln, d.h. die Ausführung den tatsächlichen Anforderungen unter Minimierung des Kostenaufwands anzupassen. Für die Ausgestaltung zu einem Verbraucherabzweig ist der Baustein als Energiebusmodul ausgeführt.

Ein weiterer Vorteil besteht, wenn der Träger mit einem Befestigungselement ausgeführt ist, bei dessen Betätigung in einem Arbeitsschritt der Träger zugleich auf einer Normprofilschiene und mit einem angereihten weiteren Träger verrastbar ist. Diese Ausführung trägt zu einem geringen Montage- und Demontageaufwand bei, der im Hinblick auf Inbetriebsetzung und Erweiterung sowie Prüfung der Schalt- und Steuergeräteeinheit großen Vorteil mit sich bringt.

Eine besonders kostengünstige Ausführung ist gegeben, wenn das Befestigungselement als federbelasteter Schieber mit einer Rastnase zur Verrastung mit der Normprofilschiene und mit einem Rastelement zur Verriegelung mit einem angereihten weiteren Träger ausgeführt ist. Dies stellt eine Lösung mit einem geringen Teileaufwand dar, was sich im Hinblick auf die Kosten für die Herstellung und Lagerhaltung günstig auswirkt. Um die Baugruppe vom Träger abzuziehen, erweist es sich als vorteilhaft, wenn diese mittels eines Ziehelements an ihrer Frontseite von dem Basis-Unterteil abziehbar ist. Bei einem kompakten Aufbau mehrerer Schalt- und Steuergeräteeinheiten nebeneinander ist so eine einfache, einhändige Demontage erreichbar.

Weitere Möglichkeiten zur Anpassung der Schaltgeräteeinheit an die jeweiligen Systemanforderungen sind gegeben, wenn der Träger an seiner zur Adaptierung der Baugruppe vorgesehenen Anschlußseite Ausnehmungen zur Aufnahme von Kontakteinsätzen zur Buserweiterung aufweist, durch die das modulare Bussystem erweiterbar ist und in die Baugruppe an ihrer Anschlußseite zu den Kontakteinsätzen passende Steuereinsätze einsetzbar sind.

Die Erfindung ermöglicht die Optimierung des Schaltschrankaufbaus bei gleichzeitiger Einbeziehung der Niederspannungs-Schaltgeräte in die Automatisierungstechnik. Folgende Einzelaufgaben können dazu genannt werden:
- Platzminimierung im Schaltschrank
- Verringerung des Montageaufwands
- Vereinfachung der Montagetätigkeit
- Reduzierung des Verdrahtungsaufwand für die Steuerverdrahtung
- Reduzierung des Verdrahtungsaufwand für die Hauptenergie
- Verringerung des Prüfaufwands
- Vereinfachung des Service

Hierzu werden die Funktionen "Mechanische Befestigung/Steuerverdrahtung der Schaltgeräte/Hauptenergieeinspeisung, -Verteilung und -Abgänge/Schalten und Schützen der Verbraucher/ Inbetriebnahme und Service" für Gruppen von Verbraucherabzweigen betrachtet und optimiert. Die Lösung besteht in einem modularen System, das einen Schaltschrankaufbau durch einfaches Zusammenfügen von Komponenten ermöglicht. Der modulare Aufbau gestattet es, ein Schaltgerätesystem mit dem gerade erforderlichen Umfang aufzubauen, wodurch eine wesentliche Kostenersparnis erreicht wird.

Ein Ausführungsbeispiel der Erfindung wird im folgenden anhand einer Zeichnung näher erläutert. Es zeigen:
- FIG 1: einen modularen Verbraucherabzweig mit Träger und Energiebusmodul im montierten Zustand,
- FIG 2: eine Ansicht des Verbraucherabzweigs gemäß FIG 1 im nicht montierten Zustand,
- FIG 3: eine Ansicht der Unterseite einer Abzweig-Baugruppe,
- FIG 4: eine Seitenansicht des Verbraucherabzweigs im montierten und kontaktierten Zustand,
- FIG 5: eine Seitenansicht eines Verbraucherabzweigs mit einer vom Datenbus abgetrennten Abzweig-Baugruppe in Vorraststellung,
- FIG 6: einen auf einer Normprofilschiene verrasteten Träger des Verbraucherabzweigs gemäß FIG 1 und 2 und
- FIG 7: zwei miteinander mechanisch und elektrisch verbundene Basis-Unterteile von Verbraucherabzweigen gemäß FIG 1 und 2.

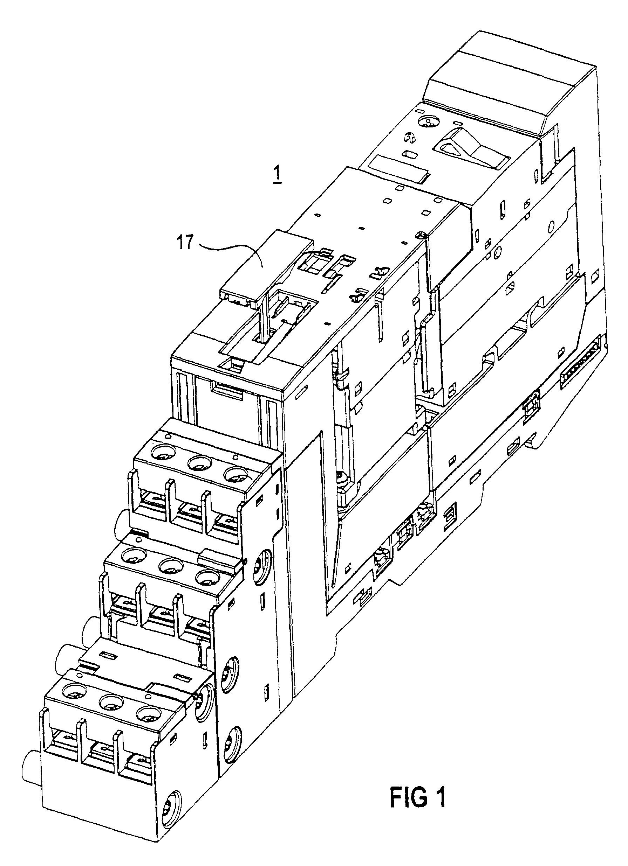

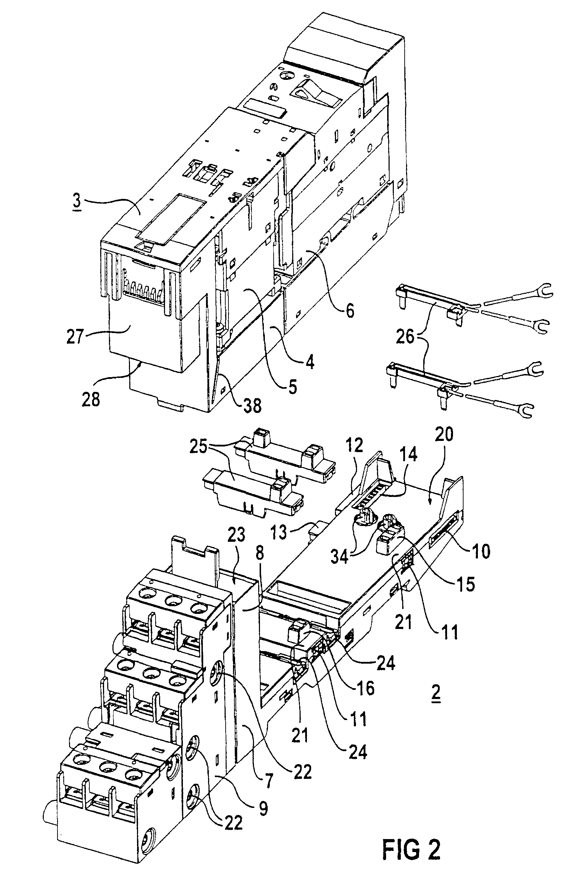

Der in FIG 1 dargestellte modulare, erweiterbare Verbraucherabzweig 1 ist gemäß FIG 2 im wesentlichen aus einem Basis-Unterteil 2 und einer darauf mechanisch und elektrisch adaptierbaren Abzweig-Baugruppe 3 zusammengesetzt. Die Abzweig-Baugruppe 3 beinhaltet einen Zwischenträger 4 sowie ein darauf befestigtes Schütz 5 und einen Leistungsschalter 6.

Das Basis-Unterteil 2 besteht im wesentlichen aus einem L-förmigen Träger 7 mit einem Führungsschacht 8, an dem ein Energiebus-Modul 9 angekoppelt ist. Im Träger 7 ist ein Steuerbus-Abschnitt integriert, der z.B. wahlweise einen Datenbus-Abschnitt 20 sowie einen Hilfsenergiebus-Abschnitt 21 umfaßt, die beide über zugehörige, beidseits des Trägers 7 zugängliche Anschlußmittel 10,11 und Gegenanschlußmittel 12,13 verfügen, die hier auf der einen Seite als Messer und auf der anderen als Buchsen ausgebildet sind. Zum Anschluß der Abzweig-Baugruppe 3 an den Datenbus-Abschnitt 20 sind an der Trägeroberseite eine Buchsenleiste 14, zum Anschluß an die Hilfsenergiebus-Abschnitte 21 die Buchsenleisten 15 und 16 vorgesehen.

Im Energiebus-Modul 9 befinden sich die Energiebus-Abschnitte 22, über die der Hauptstrom eines an den Verbraucherabzweig 1 anzuschließenden Verbrauchers geführt wird. Der Anschluß an die Energiebus-Abschnitte 22 erfolgt über im Führungsschacht 8 liegende, hier nicht sichtbare Steckkontakte 23. Auf der Frontseite des Trägers 7 sind Ausnehmungen 24 vorhanden, in die im Bedarfsfall Kontakteinsätze 25 einsetzbar sind. Diese sind mit ebenfalls nachträglich an der Abzweig-Baugruppe 3 einsetzbaren Steckereinsätzen 26, z.B. zur Ansteuerung von Hilfsschaltern der Abzweig-Baugruppe 3, kontaktierbar.

Die Abzweig-Baugruppe 3 weist einen mit dem Führungsschacht 8 formschlüssigen, hier im Querschnitt rechteckigen Kanal 27 auf, in dem Gegensteckkontakte 28 zur Kontaktierung mit den Steckkontakten 23 im Führungsschacht 8 liegen. Der Führungsschacht 8 dient also zugleich zur Zentrierung bei der mechanischen Adaptierung der Abzweig-Baugruppe 3 auf dem Basis-Unterteil 2 und zur elektrischen Verbindung mit dem Energiebus-Abschnitt 22.

Die Lage der Steckkontakte 23 bzw. der Gegensteckkontakte 28 im Führungsschacht 8 bzw. Kanal 27 gewährleistet den erforderlichen Berührschutz gegenüber den im Hauptstromkreis hohen Betriebsspannungen von über 100 V.

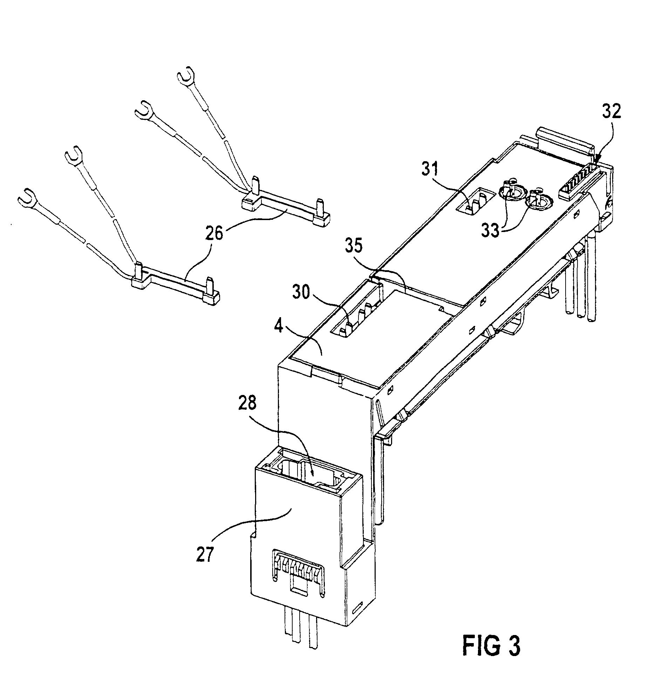

FIG 3 zeigt eine Unteransicht des Zwischenträgers 4, der dem Träger 7 des Basis-Unterteils 2 angepaßt L-förmig ausgebildet ist und den Kanal 27 mit den Gegensteckkontakten 28 umfaßt. An der Unterseite sind die zur Kontaktierung der Hilfsenergiebus-Abschnitte 21 dienenden Messerkontakte 30 bzw. 31 sowie die Kontaktleiste 32 zum Anschluß an den Datenbus-Abschnitt 20 vorhanden. Über Kodierelemente 33 auf dem Zwischenträger 4 und entsprechende Kodierelemente 34 am Basis-Unterteil (siehe FIG 2) kann der Anschluß bestimmter Geräteausführungen zugelassen bzw. ausgeschlossen werden. Die Steuereinsätze 26 können in einem Schlitz 35 an der Unterseite des Zwischenträgers 4 eingebracht werden.

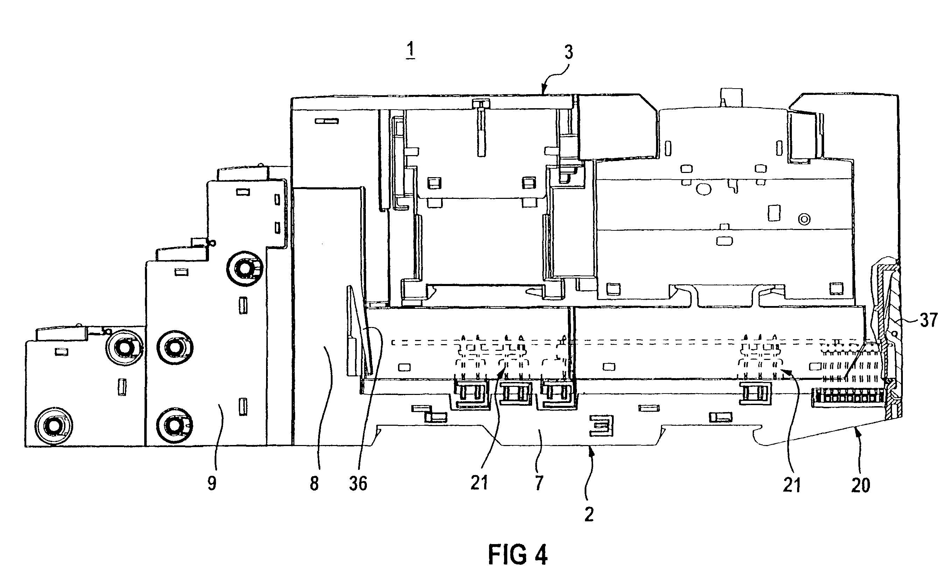

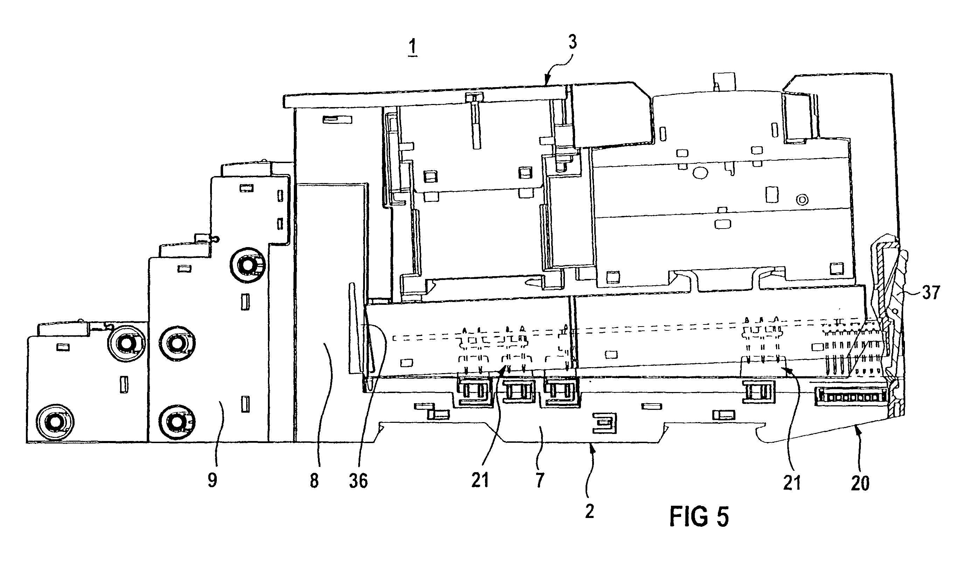

In FIG 4 ist eine Seitenansicht des Verbraucher-Abzweigs 1 im adaptierten und kontaktierten Zustand dargestellt, in dem eine Rastfeder 36 am Führungsschacht 8 die Abzweig-Baugruppe 3 zum Basis-Unterteil 2 gegen Ziehen verriegelt. Über einen Rasthaken 37 an der Abzweig-Baugruppe 3 kann diese oben gelöst werden. Hierzu wird nach Betätigung des Rasthakens 37 die Abzweig-Baugruppe 3 in eine Vorraststellung gemäß FIG 5 gebracht. In dieser Vorraststellung ist die Verbindung zum Steuer- bzw. Datenbus-Abschnitt 20 aufgetrennt. Durch Drehbewegung in die Vorraststellung drückt die Abzweig-Baugruppe 3 die Rastfeder 36 zurück, wodurch die Verriegelung gegen Ziehen zum Basis-Unterteil 2 aufgehoben wird. Erst dann läßt sich die Abzweig-Baugruppe 3 vom Basis-Unterteil 2 mittels eines Ziehelements 17 an der Frontseite der Abzweig-Baugruppe 3 gemäß FIG 1 abziehen. Die Drehbewegung wird durch Nutzung der Materialeigenschaften und/oder einen Gelenk- bzw. Drehmechanismus erreicht, der gemäß FIG 2 durch konstruktive Ausprägung des Gehäuses der Abzweig-Baugruppe 3, z.B. durch einen Schlitz 38 im Zwischenträger 4 realisiert sein kann. Dabei wird zugleich für eine Federelement-Ausprägung und Zurückstellung (Drehbewegung) der Abzweig-Baugruppe 3 gesorgt. Anstelle der Drehbewegung kann das Lösen der Kontaktierung zum Steuerbus-Abschnitt 20,21 auch durch Ausrücken der Abzweig-Baugruppe 3 in die Vorraststellung erfolgen.

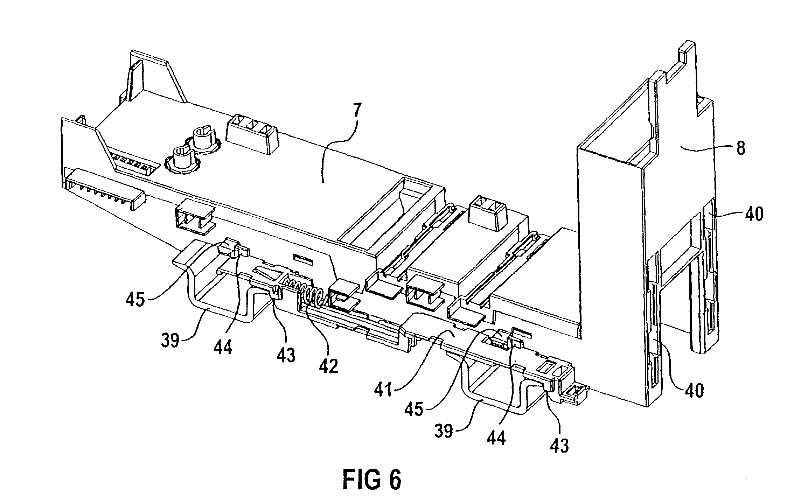

In FIG 6 ist ein auf zwei Normprofilschienen 39 verrasteter Träger 7 eines Basis-Unterteils 2 dargestellt. Der Führungsschacht 8 des Trägers 7 ist mit einer Kontur 40 zur Ankopplung verschiedener Anbauelemente, z.B. eines Energiebus-Moduls 9 gemäß FIG 2 oder anderer Bausteine mit Sonderfunktionen versehen, wie z.B. Bremsen, Thermistorschutz usw. An dem Träger 7 ist ein Schieber 41 unter Vorbelastung einer Druckfeder 42 festgelegt, mit dem in einem Arbeitsschritt sowohl die Ankopplung an die Normprofilschienen 39 sowie die Verriegelung mit einem weiteren, angereihten Basis-Unterteil 2 erfolgt. Hierzu ist der Schieber 41 einerseits mit Rastnasen 43 zur Hinterrastung der Normprofilschienen 39 und auf der Oberseite mit zwei Stegen 44 versehen, die die Rasthaken 45 an der Seitenwand eines angereihten Basis-Unterteils 2 hinterrasten.

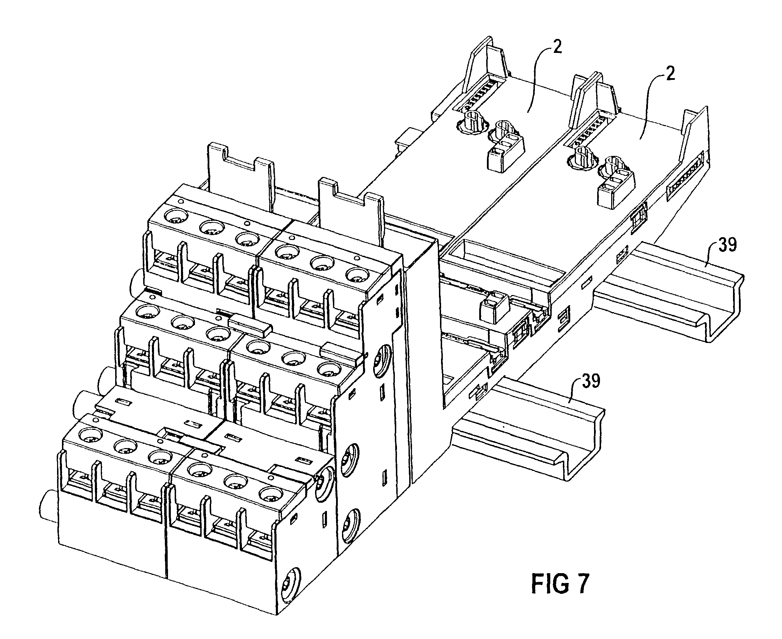

FIG 7 zeigt zwei auf Normprofilschienen 39 verrastete und zueinander verriegelte Basis-Unterteile 2, durch die modular eine stehende Verdrahtung aufgebaut ist. Die eigentlichen Funktionsbaugruppen, z.B. die Abzweig-Baugruppen 3 werden in Verbindung mit der mechanischen Adaptierung auf den Basis-Unterteilen 2 zugleich mit dem gesamten Bussystem elektrisch kontaktiert. Dies bedeutet eine wesentliche Vereinfachung bei der Projektierung, der Montage, Inbetriebsetzung sowie den erforderlichen Prüfungen.

## Patentansprüche

1. Kommunikationsfähige Schaltgeräteeinheit zum Anschluß an ein Bussystem, welches einen Energiebus, einen Steuerbus sowie mindestens einen Hilfsenergiebus enthält, wobei die Schalt- und Steuergeräteeinheit (1), die zum betriebsmäßigen Schalten und Schützen eines Verbrauchers dient, einen Träger (7) und eine auf diesem montierbare Baugruppe (3) umfaßt und wobei das Bussystem in den Träger (7) einlegbar ist und die Baugruppe (3) das Bussystem nach Montage auf dem Träger (7) kontaktiert, **dadurch gekennzeichnet, daß** der Träger als ein modulares Basis-Unterteil (2) mit einem integrierten modularen Bussystem in Form eines Energiebus-Abschnitts (22) und eines Steuerbus-Abschnitts ausgeführt ist, der wahlweise einen Datenbus-Abschnitt (20) und einen Hilfsenergiebus-Abschnitt (21) aufweisen kann, und daß die Anschlüsse (23) an den Energiebus-Abschnitt (22) in einem Führungsschacht (8) angeordnet sind, der die Baugruppe (3) für die Montage und Kontaktierung auf dem Basis-Unterteil (2) zentriert.

2. Kommunikationsfähige Schaltgeräteeinheit nach Anspruch 1, **dadurch gekennzeichnet, daß** die Baugruppe (3) derart an das Basis-Unterteil (2) angekoppelt ist, daß ein teilweises Lösen der Baugruppe (3) mit gleichzeitigem Auftrennen der Kontaktierung zum Steuerbus-Abschnitt (20) unter Beibehaltung der Anschlüsse zum Energiebus-Abschnitt (22) möglich ist.

3. Kommunikationsfähige Schaltgeräteeinheit nach Anspruch 2, **dadurch gekennzeichnet, daß** die Ankopplung der Baugruppe (3) durch einen Gelenk- und/oder Drehmechanismus (38) realisiert ist.

4. Kommunikationsfähige Schaltgeräteeinheit nach Anspruch 1 oder 2, **dadurch gekennzeichnet, daß** das Basis-Unterteil (2) aus einem Träger (7) mit dem Führungsschacht (8) und einem daran ankoppelbaren Baustein (9) zusammengesetzt ist.

5. Kommunikationsfähige Schaltgeräteeinheit nach einem der vorangehenden Ansprüche, **dadurch gekennzeichnet**, daß der Baustein ein Energiebus-Modul (9) ist.

6. Kommunikationsfähige Schaltgeräteeinheit nach einem der vorangehenden Ansprüche, **dadurch gekennzeichnet, daß** der Träger (7) mit einem Befestigungselement (41) ausgeführt ist, bei dessen Betätigung in einem Arbeitsschritt der Träger (7) zugleich auf einer Normprofilschiene (39) und mit einem angereihten weiteren Träger (7) verrastbar ist.

7. Kommunikationsfähige Schaltgeräteeinheit nach einem der vorangehenden Ansprüche, daß das Befestigungselement als federbelasteter Schieber (41) mit einer Rastnase (43) zur Verrastung mit der Normprofilschiene (39) und mit einem Rastelement (45) zur Verriegelung mit einem angereihten weiteren Träger (7) ausgeführt ist.

8. Kommunikationsfähige Schaltgeräteeinheit nach einem der vorangehenden Ansprüche, **dadurch gekennzeichnet**, daß die Baugruppe (3) als Abzweig-Baugruppe (3) mit einem Schütz (5) und einem Leistungsschalter (6) ausgestattet ist.

9. Kommunikationsfähige Schaltgeräteeinheit nach einem der vorangehenden Ansprüche, **dadurch gekennzeichnet, daß** die Baugruppe (3) mit einem Schütz (5) und einem Überlast-Relais ausgestattet ist.

10. Kommunikationsfähige Schaltgeräteeinheit nach einem der vorangehenden Ansprüche, **dadurch gekennzeichnet**, daß die Baugruppe (3) mittels eines Ziehelements (17) an ihrer Frontseite von dem Basis-Unterteil (2) abziehbar ist.

11. Kommunikationsfähige Schaltgeräteeinheit nach einem der vorangehenden Ansprüche, **dadurch gekennzeichnet**, daß der Träger (7) an seiner zur Adaptierung der Baugruppe (3) vorgesehenen Anschlußseite Ausnehmungen (24) zur Aufnahme von Kontakteinsätzen (25) aufweist, durch die das modulare Bussystem erweiterbar ist und daß in die Baugruppe (3) an ihrer Anschlußseite zum Anschluß an die Kontakteinsätze (25) passende Steckereinsätze (26) einsetzbar sind.

## Claims

1. A switchgear unit with a communications capability for connection to a bus system which contains a power bus, a control bus as well as at least one auxiliary power bus, in which case the switching and switchgear unit (1) which is used for operational switching and protection of a load comprises a support (7) and an assembly (3) which can be mounted on this support (7), and in which case the bus system can be inserted into the support (7), and the assembly (3) makes contact with the bus system after mounting on the support (7), **characterised in that** the support is designed as a modular base lower part (2) having an integrated modular bus system in the form of a power bus section (22) and a control bus section, which may optionally have a data bus section (20) and an auxiliary power bus section (21), and in that the connections (23) to the power bus section (22) are arranged in a guide shaft (8) which centres the assembly (3) on the base lower part (2) for mounting and making contact.

2. The switchgear unit with a communications capability as claimed in claim 1, **characterised in that** the assembly (3) is coupled to the base lower part (2) such that partial release of the assembly (3) with simultaneous disconnection of the contact with the control bus section (20) is possible, while maintaining the connections to the power bus section (22).

3. The switchgear unit with a communications capability as claimed in claim 2, **characterised in that** the coupling of the assembly (3) is provided by a joint and/or rotating mechanism (38).

4. The switchgear unit with a communications capability as claimed in claim 1 or 2, **characterised in that** the base lower part (2) is composed of a support (7) with the guide shaft (8) and a module (9) which can be coupled to it.

5. The switchgear unit with a communications capability as claimed in one of the preceding claims, **characterised in that** the module is a power bus module (9).

6. The switchgear unit with a communications capability as claimed in one of the preceding claims, **characterised in that** the support (7) is designed with an attachment element (41) which, when operated, allows the support (7) to be latched simultaneously on a standard profiled rail (39) and to a further support (7) arranged in a row, in one operation.

7. The switchgear unit with a communications capability as claimed in one of the preceding claims, **characterised in that** the attachment element is designed as a spring-loaded slide (41) with a latching tab (43) for latching to the standard profiled rail (39) and to a latching element (45) for locking to a further support (7) arranged in a row.

8. The switchgear unit with a communications capability as claimed in one of the preceding claims, **characterised in that** the assembly (3) is equipped, as a feeder assembly (3), with a contactor (5) and a power breaker (6).

9. The switchgear unit with a communications capability as claimed in one of the preceding claims, **characterised in that** the assembly (3) is equipped with a contactor (5) and an overload relay.

10. The switchgear unit with a communications capability as claimed in one of the preceding claims, **characterised in that** the assembly (3) can be withdrawn from the base lower part (2) by means of a pulling element (17) on its front face.

11. The switchgear unit with a communications capability as claimed in one of the preceding claims, **characterised in that**, on its connection side which is intended for adaptation of the assembly (3), the support (7) has recesses (24) for accommodating contact inserts (25) by means of which the modular bus system can be expanded, and in that plug inserts (26) can be inserted into the assembly (3), the connection side of which plug inserts (26) is suitable for connection to the contact inserts (25).

## Revendications

1. Unité d'appareils de commutation apte à la communication pour le raccordement à un système de bus, qui contient un bus d'énergie, un bus de commande ainsi qu'au moins un bus d'énergie auxiliaire, l'unité (1) d'appareils de commutation et de commande, qui sert à commuter et protéger un appareil utilisateur du point de vue du fonctionnement, comprenant un support (7) et un module (3) pouvant y être monté, et le système de bus pouvant être inséré dans le support (7), et le module (3) du système de bus pouvant être mis en contact après montage sur le support (7), **caractérisé en ce que** le support est réalisé sous la forme d'une partie (2) inférieure de base modulaire comportant un système de bus modulaire intégré sous la forme d'une partie (22) de bus d'énergie et d'une partie de bus de commande, qui peut comporter au choix une partie (20) de bus de données et une partie (21) de bus d'énergie auxiliaire, et en ce que les raccordements (23) à la partie (22) de bus d'énergie sont montés dans un puits (8) de guidage qui centre le module (3) pour le montage et la mise en contact sur la partie (2) inférieure de base.

2. Unité d'appareils de commutation apte à la communication suivant la revendication 1, **caractérisée en ce que** le module (3) est couplé à la partie (2) inférieure de base de telle manière qu'un détachement partiel du module (3) avec séparation simultanée de la mise en contact avec la partie (20) de bus de commande est possible tout en conservant les raccordements à la partie (22) de bus d'énergie.

3. Unité d'appareils de commutation apte à la communication suivant la revendication 2, **caractérisée en ce que** le raccordement du module (3) est réalisé par un mécanisme (38) d'articulation et/ou de rotation.

4. Unité d'appareils de commutation apte à la communication suivant la revendication 1 ou 2, **caractérisée en ce que** la partie (2) inférieure de base se compose d'un support (7) comportant le puits (8) de guidage et d'un élément (9) pouvant y être raccordé.

5. Unité d'appareils de commutation apte à la communication suivant l'une des revendications précédentes, **caractérisée en ce que** l'élément est un module (9) de bus d'énergie.

6. Unité d'appareils de commutation apte à la communication suivant l'une des revendications précédentes, **caractérisée en ce que** le support (7) est réalisé en ayant un élément (41) de fixation lors de l'actionnement duquel, en une étape opératoire, le support peut être encliqueté en même temps sur un rail (39) profilé normalisé et à un support (7) supplémentaire en fils.

7. Unité d'appareils de commutation apte à la communication suivant l'une des revendications précédentes, **caractérisée en ce que** l'élément de fixation est réalisé en coulisseau (41) soumis à la force d'un ressort, comportant un ergot (43) d'encliquetage pour l'encliquetage aux rails (39) profilés normalisés et comportant un élément (45) d'encliquetage pour le verrouillage à un support (7) supplémentaire à la file.

8. Unité d'appareils de commutation apte à la communication suivant l'une des revendications précédentes, **caractérisée en ce que** le module (3) est muni en tant que module (3) de bifurcation d'un contacteur (5) et d'un disjoncteur (6).

9. Unité d'appareils de commutation apte à la communication suivant l'une des revendications précédentes, **caractérisée en ce que** le module (3) est muni d'un contacteur (5) et d'un relais de surcharge.

10. Unité d'appareils de commutation apte à la communication suivant l'une des revendications précédentes, **caractérisée en ce que** le module (3) peut être retiré de la partie (2) inférieure de base au moyen d'un élément (17) pour retirer sur la face frontale du module.

11. Unité d'appareils de commutation apte à la communication suivant l'une des revendications précédentes, **caractérisée en ce que** le support (7) comporte sur sa face de raccordement prévue pour l'adaptation du module (3) des évidements (24) de réception d'inserts (25) de contact par lesquels le système de bus modulaire peut être étendu et en ce que des inserts (26) de connecteurs appropriés peuvent être introduits dans le module (3) sur sa face de raccordement pour le raccordement aux inserts (25) de contact.
